# EUROPÄISCHE PATENTSCHRIFT

(11) **EP 3 421 789 B1**
(45) Veröffentlichungstag und Bekanntmachung des Hinweises auf die Patenterteilung: **17.02.2021**
(21) Anmeldenummer: 18180692.8
(22) Anmeldetag: 29.06.2018
(51) Int. Cl.: F03D 80/70

(54) **WÄLZLAGER FÜR WINDENERGIEANLAGENTRIEBSTRANG**
ROLLER BEARING FOR WIND ENERGY TURBINE DRIVETRAIN
PALIER À ROULEMENT POUR CHAÎNE CINÉMATIQUE DE L'ÉOLIENNE

(30) Priorität: 30.06.2017 DE 102017006192
(43) Veröffentlichungstag der Anmeldung: 02.01.2019
(73) Patentinhaber: Siemens Gamesa Renewable Energy Service GmbH, 22297 Hamburg (DE)
(72) Erfinder: Trede, Alf, 25885 Immenstedt (DE)
(74) Vertreter: Glawe, Delfs, Moll

(56) Entgegenhaltungen:
- EP-A1- 3 018 375
- WO-A1-2009/018976
- DE-A1-102010 054 318
- DE-A1-102014 205 812
- DE-B4- 19 964 390
- US-A1- 2010 009 799

## Beschreibung

Die Erfindung betrifft ein Wälzlager für die Triebstranglagerung von Windenergieanlagen sowie eine Windenergieanlage mit entsprechendem Wälzlager, wie z.B. aus US2010/009799 A1 bekannt.

Bei bekannten Windenergieanlagen lässt sich ein um eine im Wesentlichen horizontale Achse drehbarer Rotor mit daran angeordneten Rotorblättern durch Wind in Rotation versetzen. Der Rotor ist dabei fest mit einer Rotorwelle - ggf. über ein Getriebe - mit einem Generator zur Umwandlung der Rotationsenergie des Rotors in elektrische Energie verbunden. Die leistungsübertragenden drehenden Komponenten vom Rotor bis zum Generator werden zusammen als Triebstrang bezeichnet und sind in einer drehbar auf einem Turm montierten Gondel angeordnet.

Der Triebstrang ist an mehreren Stellen gelagert, wobei in der Regel zumindest ein Lager im Bereich der Rotorwelle angeordnet ist, welches häufig als Festlager ausgebildet ist, um auch auf den Triebstrang einwirkende Axialkräfte aufnehmen zu können. Typische Triebstranglagerungen in der Windenergie sind bspw. die sog. Drei- oder Vierpunktlagerungen. Bei einer Dreipunktlagerung erfolgt eine zweite Lagerung der Rotorwelle über das Getriebe. Bei einer Vierpunktlagerung ist ein zweites Lager an der Rotorwelle vorgesehen, hinter dem das Getriebe aufgesteckt wird. Das Getriebe ist in beiden Fällen elastisch gelagert und kann so die Kräfte an den Maschinenträger übertragen. Als Festlager werden bspw. zweireihige Kegelrollenlager oder Pendelrollenlager verwendet, die jeweils auf sämtliche zu erwartende Belastungen ausgelegt sein müssen. Das hat jedoch regelmäßig zur Folge, dass ein auf die zu erwartenden Axialbelastungen ausgelegtes Pendelrollenlager im Hinblick auf die zu erwartenden Radialbelastungen deutlich überdimensioniert ist. Letztendlich sind die erforderlichen Lager dadurch teuer und schwer.

Der Erfindung liegt die Aufgabe zugrunde, eine gegenüber dem Stand der Technik verbessertes Wälzlager für die Triebstranglagerung von Windenergieanlagen sowie eine Windenergieanlage mit einem entsprechenden Wälzlager zu schaffen.

Gelöst wird diese Aufgabe durch ein Wälzlager gemäß dem Hauptanspruch sowie eine Windenergieanlage gemäß dem Anspruch 9. Vorteilhafte Weiterbildungen sind Gegenstand der abhängigen Ansprüche.

Demnach betrifft die Erfindung ein Wälzlager für die Triebstranglagerung von Windenergieanlagen, mit zwei Rollenreihen, die jeweils zwischen einem Innenring und einem Außenring umlaufen, wobei die Außenringe konzentrisch um eine gemeinsame Lagerachse angeordnet sind, wobei die beiden Innenringe getrennt voneinander ausgeführt und durch ein Distanzelement in axialer Richtung voneinander beabstandet sind, die Laufbahnen der Außenringe jeweils hohlkugelförmig ausgestaltet sind, und wobei die Mittelpunkte der beiden hohlkugelförmigen Laufbahnen kongruent und auf der Lagerachse liegend sind.

Weiterhin betrifft die Erfindung eine Windenergieanlage mit einem Triebstrang umfassend eine Rotorwelle, wobei die Rotorwelle mit einem erfindungsgemäßen Wälzlager gelagert ist.

Zunächst werden einige in Zusammenhang mit der Erfindung verwendete Begriffe erläutert.

"Druckwinkel" bezeichnet den Winkel zwischen der Radialebene und der Drucklinie eines Wälzlagers, wobei die Drucklinie durch die theoretischen singulären zentralen Berührungspunkte der Wälzkörper am Außen- und Innenring führt und die Wirkungslinie, auf der eine äußere, am Lager angreifende Kraft vom Innenring über die Wälzkörper auf den Außenring (oder umgekehrt) übertragen wird, darstellt.

Bei dem erfindungsgemäßen Wälzlager sind die beiden Rollenreihen aufgrund des Distanzelementes gegenüber bekannten Rotorwellenlagern aus dem Stand der Technik deutlich voneinander beabstandet. Dadurch wird der Druckwinkel vergrößert und auf die Rotorwelle einwirkende Schubkräfte können besser aufgenommen werden. Gleichzeitig wird durch die erfindungsgemäße Hohlkugelform der Laufbahnen der Außenringe der beiden Lager mit gemeinsamen Zentrum auf der Lagerachse sowie der erfindungsgemäßen Anordnung der Kraftflusslinien eine gewisse Winkelbeweglichkeit des Lagers erreicht, um bspw. Fluchtungsfehler der Rotorwelle gegenüber dem Lager oder systembedingte Getriebeverlagerungen bei einer Dreipunktlagerung auszugleichen

Aufgrund der erfindungsgemäßen, für die Erreichung der bereits beschriebenen erwünschten Eigenschaften des Wälzlagers erforderlichen Geometrie der Außenringe, aus der sich unmittelbar auch die Geometrie der Rollen und der Innenringe ergibt, wird die Steilheit der Laufbahn der Außenringe praktisch ausschließlich durch den Abstand der beiden Innenringe voneinander und damit die Länge des Distanzstücks bestimmt. Über die Steilheit der Laufbahn der Außenringe, welche dem Druckwinkel entspricht, lässt sich das Verhältnis der Aufnahmefähigkeit des Lagers für Axial- und Radialbelastungen einstellen. In der Folge ist es durch geeignete Wahl der Länge des Distanzstücks und der daraus resultierenden Ausgestaltung der übrigen Lagerkomponenten möglich, das erfindungsgemäße Wälzlager auch an deutlich divergierende Anforderungen hinsichtlich Axial- und Radialbelastungen anzupassen. So ist es bspw. möglich, eine hohe Aufnahmefähigkeit für Axialbelastungen vorzusehen, ohne gleichzeitig die Aufnahmefähigkeit für Radialbelastungen überdimensionieren zu müssen, wie dies bei den Wälzlagern aus dem Stand der Technik regelmäßig der Fall ist. Durch die gegenüber dem Stand der Technik verbesserte Anpassbarkeit des Wälzlagers an die tatsächlich zu erwartenden Lastzustände ist das erfindungsgemäße Wälzlager in der Regel kleiner, leichter und kostengünstiger als ein zwangsläufig in Teilen überdimensioniertes Lagers gemäß dem Stand der Technik.

Die Lauffläche der Rollen der Rollenreihen sind an die jeweilige Laufbahn der Außenringe angepasst, sodass sie sich in den Radius der die Außenring-Laufbahn definierende Hohlkugel anschmiegen bzw. der Krümmungsradius der Lauffläche der Rollen kleiner gleich dem Krümmungsradius der genannten Hohlkugel ist. Die Geometrie der Innenringe ist entsprechend an den Krümmungsradius der jeweiligen Rollenreihen angepasst.

Der Druckwinkel der beiden Rollenreihen kann betragsmäßig identisch sein, sodass die Belastungen bei einem von der Lagerachse abweichenden Rotorwellenachse bspw. aufgrund eines Fluchtungsfehlers eine gleichmäßige Belastung der beiden Rollenreihen auftritt. Es ist jedoch auch möglich, das der Druckwinkel der beiden Rollenreihen unterschiedlich ist, wodurch eine individuelle Anpassung der Aufnahmefähigkeit der beiden Rollenreihen sowohl in Hinblick auf Radial- aber auch Axialbelastungen möglich ist.

Es ist bevorzugt, wenn der Radius der einen hohlkugelförmigen Laufbahn größer ist als der Radius der anderen hohlkugelförmigen Laufbahn. Indem die beiden hohlkugelförmigen Laufbahnen unterschiedliche Radien haben, woraus sich unmittelbar auch Abweichungen in der Geometrie der Rollen und der Innenringe ergeben, kann die Aufnahmefähigkeit der beiden Rollenreihen sowohl in Hinblick auf Radial- aber auch Axialbelastung an die zu erwartenden Belastungen gesondert angepasst werden, insbesondere wenn dadurch der Druckwinkel einer Rollenreihe verändert wird.

Vorzugsweise können auch die Längen der Rollen der einen Rollenreihe größer sein als die Längen der Rollen in der anderen Rollenreihe. Indem in der einen Rollenreihe längere Rollen eingesetzt werden, kann diese Rollenreihe größere Kräfte aufnehmen, wobei das Verhältnis von Radial- und Axialkräften wiederum von der Steilheit der Lauffläche an dem jeweiligen Außenring abhängt.

Es ist bevorzugt, wenn der Innendurchmesser der beiden Innenringe identisch ist, wobei der Innendurchmesser des Distanzelementes vorzugsweise um ein, wenigstens eine Spielpassung sicherstellendes Maß größer ist als der Innendurchmesser der beiden Innenringe. Die beiden Innenringe können in diesem Fall wie üblich auf eine Komponente eines Triebstrangs, wie bspw. die Rotorwelle, aufgeschoben werden, ohne dass es dabei aufgrund des Distanzelementes zu besonderen Schwierigkeiten käme. Das Distanzelement weist aufgrund der bevorzugten Wahl des Innendurchmessers gegenüber einer durch die Innenringe geschobenen Welle nämlich Spiel auf, sodass sie beim Aufschieben auf die Welle kein zusätzlicher Reibwiderstand ergibt.

Das Distanzelement kann mit einem oder beiden Innenringen verbunden sein, wobei nicht ausgeschlossen ist, dass das Distanzelement mit einem oder beiden Innenringen einstückig ausgeführt ist. Es ist aber auch möglich, dass die Distanzhülse zumindest mit einem Innenring nicht unmittelbar verbunden ist. In diesem Fall wird die Lage des Distanzelementes zu wenigstens einem Innenring allein durch eine durch die Innenringe und das Distanzelement eingeschobene, zu lagernde Welle festgelegt, wobei das Distanzelement auf Stoß mit dem wenigstens einen Innenring liegt.

Das Distanzelement kann als Distanzhülse ausgeführt sein. Ein so ausgestaltetes Distanzelement lässt sich kostengünstig herstellen.

Die Innenringe des Wälzlagers können einen Innendurchmesser von 500 mm oder mehr, vorzugweise 1.000 mm oder mehr aufweisen. Die Distanzhülse kann eine Länge von ca. 20-50% des Wellendurchmessers, der typischerweise 800 mm oder mehr, vorzugsweise von 1.000 mm oder mehr beträgt, haben. Die Durchmesser der Rollen können bspw. im Bereich zwischen 60 mm und 85 mm liegen.

Durch die erfindungsgemäß vorgesehenen geteilten Lagerringe für die beiden Rollenreihen kann das Lagerspiel des erfindungsgemäßen Wälzlagers gut eingestellt werden, um so ein gutes Abrollverhältnis für die Wälzkörper und somit einer längere Lebensdauer zu erhalten. Die Rollenreihen können einen beliebigen, aus dem Stand der Technik bekannten Lagerkäfig umfassen, bspw. ein getrennter Käfig für jede Rollenreihe, eine schwimmende Lagerung, ein geschlossener Fensterkäfig oder Distanz- bzw. Gleitstücke auf dem jeweiligen Innenring.

Bei der erfindungsgemäßen Windenergieanlage mit einem Triebstrang umfassend eine Rotorwelle ist die Rotorwelle als Teil des Triebstrangs mit einem erfindungsgemäßen Wälzlager gelagert. Zur Erläuterung wird auf die vorstehenden Ausführungen verwiesen.

Da bei einer solchen Windenergieanlage die Lagerung der Rotorwelle insbesondere in axialer Richtung von dem Rotor hin zum Generator belastet wird, ist bevorzugt, wenn der Radius der vom Rotor weiter entfernten hohlkugelförmigen Laufbahn größer ist als der Radius der dem Rotor näherliegenden anderen hohlkugelförmigen Laufbahn und/oder die Länge und/oder der Durchmesser der Rollen der vom Rotor weiter entfernten Rollenreihe größer ist als die Länge und/oder der Durchmesser der Rollen der dem Rotor näherliegenden Rollenreihe. Durch diese Maßnahmen einzeln oder in Kombination kann die Aufnahmefähigkeit des Wälzlagers für axiale Belastungen in der genannten Richtung erhöht werden, ohne das gleichzeitig auch die Aufnahmefähigkeit in die entgegengesetzte Richtung erhöht werden müsste. Eine unnötige Überdimensionierung des Lagers im Hinblick auf nicht zu erwartende Belastungen kann so vermieden werden.

In einem ersten Beispiel für eine solche asymmetrische Ausgestaltung des Wälzlagers, sind sämtliche der genannten Maßnahmen verwirklicht. Bei einem solchen Wälzlager ist also der Radius der vom Rotor weiter entfernten hohlkugelförmigen Laufbahn größer ist als der Radius der dem Rotor näherliegenden anderen hohlkugelförmigen Laufbahn, und sowohl die Länge als auch der Durchmesser der Rollen der vom Rotor weiter entfernten Rollenreihe sind größer als die Länge bzw. der Durchmesser der Rollen der dem Rotor näherliegenden Rollenreihe. In einem zweiten Beispiel für ein erfindungsgemäßes asymmetrisches Wälzlager sind die Radien der hohlkugelförmigen Laufbahnen der beiden Rollenreihen identisch und nur sowohl die Länge als auch der Durchmesser der Rollen der vom Rotor weiter entfernten Rollenreihe sind größer als die Länge bzw. der Durchmesser der Rollen der dem Rotor näherliegenden Rollenreihe. In beiden asymmetrischen Ausführungen können Länge und/oder Durchmesser der Rollen der vom Rotor weiter entfernten Rollenreihe bspw. um 50 bis 100% größer sein als die entsprechenden Maße der dem Rotor näherliegenden Rollenreihe. Durch die Asymmetrie wird das Lager, das die vom Rotor weiter entfernte Rollenreihe umfasst, breiter, sodass zusätzlich zum Distanzelement zwischen den beiden Lagern der Abstand in axialer Richtung vergrößert wird und dadurch Druckwinkel und Schubaufnahme erhöht werden.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel eines erfindungsgemäßen Wälzlagers für die Triebstranglagerung von Windenergieanlagen;
- Figur 2:: ein zweites Ausführungsbeispiel eines erfindungsgemäßen Wälzlagers für die Triebstranglagerung von Windenergieanlagen; und
- Figur 3:: ein drittes Ausführungsbeispiel eines erfindungsgemäßen Wälzlagers für die Triebstranglagerung von Windenergieanlagen;

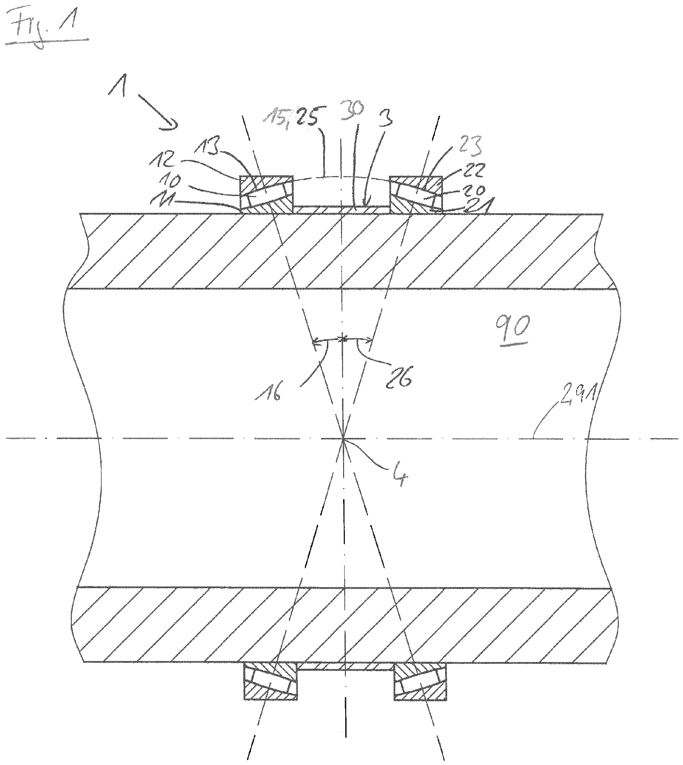

In Figur 1 ist ein erstes Ausführungsbeispiel eines erfindungsgemäßen Wälzlagers 1 dargestellt. Das Wälzlager 1 dient dabei der Lagerung der nur abschnittsweise dargestellten Rotorwelle 90, die als Teil des Triebstrangs einer Windenergieanlage auf bekannte Weise auf der einen Seite mit dem Rotor der Windenergieanlage, auf der anderen Seite mit einem Getriebe und darüber mit einem Generator verbunden (nicht dargestellt). Aus Gründen der Übersichtlichkeit wurde weiterhin auf die Darstellung des Gehäuses, in dem das Wälzlager 1 angeordnet ist, verzichtet.

Das Wälzlager 1 umfasst zwei Rollenreihen 10, 20, die jeweils zwischen einem Innenring 11, 21 und einem Außenring 12, 22 umlaufen. Die Innenringe 11, 21 sind dabei auf der Rotorwelle 90 angeordnet und dort befestigt (nicht dargestellt). Die Innenringe 11, 21 weisen beide denselben an den Durchmesser der Rotorwelle 90 angepassten Innendurchmesser auf.

Aufgrund der gemeinsamen Anordnung auf der Rotorwelle 90 und der eines Wälzlagers inhärenten Eigenschaften sind die Innenringe 11, 21, die Rollenreihen 10, 20 und die Außenringe 12, 22 jeweils konzentrisch um die Lagerachse 2, die mit der Rotorwellenachse 91 zusammenfällt, angeordnet. Dabei sind die Innenringe 11, 21 durch das dazwischen angeordnete Distanzelement 3 in axialer Richtung voneinander beabstandet. Dabei liegt das Distanzelement 3 auf Stoß an den Innenringen 11, 21 an, ist mit diesem aber nicht weiter verbunden. Die Lage des Distanzelementes 3 der Innenringe 11, 21 wird somit allein durch die in die Innenringe 11, 21 und das Distanzelement 3 eingeschobene Rotorwelle 90 festgelegt. Die Halterung des Lagers 1 als Ganzes kann bspw. über eine Wellenschulter und eine Mutter bzw. einen aufgeschrumpften Ring (nicht dargestellt) erfolgen, wobei die Wellenschulter rotorseitig, die Mutter bzw. der aufgeschrumpfte Ring getriebeseitig angeordnet sein kann. Das Distanzelement 3 ist als Distanzhülse 30 ausgestaltet, deren Innendurchmesser eine Spielpassung gegenüber der Rotorwelle 90 gewährleistet.

Die Laufbahnen 13, 23 an den Außenringen 12, 22 sind jeweils hohlkugelförmig ausgestaltet. Aus dieser Hohlkugelform der Laufbahnen 13, 23 ergibt sich unmittelbar eine Fassform für die Rollen der Rollenreihen 10, 22 sowie die daran angepasste Form der Laufbahnen auf den Innenringen 11, 21.

Die Hohlkugelform der Laufbahnen 13, 23 an den Außenringen 12, 22 weisen den gemeinsamen Mittelpunkt 4, der auf der Lagerachse 2 liegt, sowie den - durch die gestrichelte Linie 15, 25 angedeuteten - identischen Radius auf. Der Druckwinkel 16, 26 der beiden Rollenreihen 10, 20 ist betragsmäßig ebenfalls identisch, im dargestellten Ausführungsbeispiel nämlich jeweils 17°.

Aufgrund der erfindungsgemäßen und in Figur 1 anhand eines ersten Ausführungsbeispiels dargestellten Ausgestaltung des Wälzlagers ist ein Lager geschaffen, dessen Verhältnis zwischen Aufnahmefähigkeit von Axial- zu Radialkräften durch die Veränderung des Abstandes zwischen den beiden Innenringen 11, 12 und somit insbesondere der Länge des Distanzelementes 3 einstellbar ist. Durch die Änderung des genannten Abstandes verändern sich nämlich die Druckwinkel 16, 26, die letztendlich mit der Steigung der Laufflächen 13, 23 auf den Außenringen 12, 22 korrespondiert. Je größer diese Steigung, desto weiter verschiebt sich das Verhältnis der Aufnahmefähigkeit in Richtung Axialbelastungen. Bleiben erfindungsgemäß die Druckwinkel 16, 26 weiterhin betragsmäßig identisch und der gemeinsame Mittelpunkt 4 der Laufflächen 13, 23 erhalten, ist eine gewisse Winkelbeweglichkeit des Wälzlagers gegeben, durch die Fluchtungsfehler der Rotorwelle 90 gegenüber dem Wälzlager 1 bzw. dem das Wälzlager 1 aufnehmenden Gehäuse (nicht dargestellt) ausgeglichen werden können.

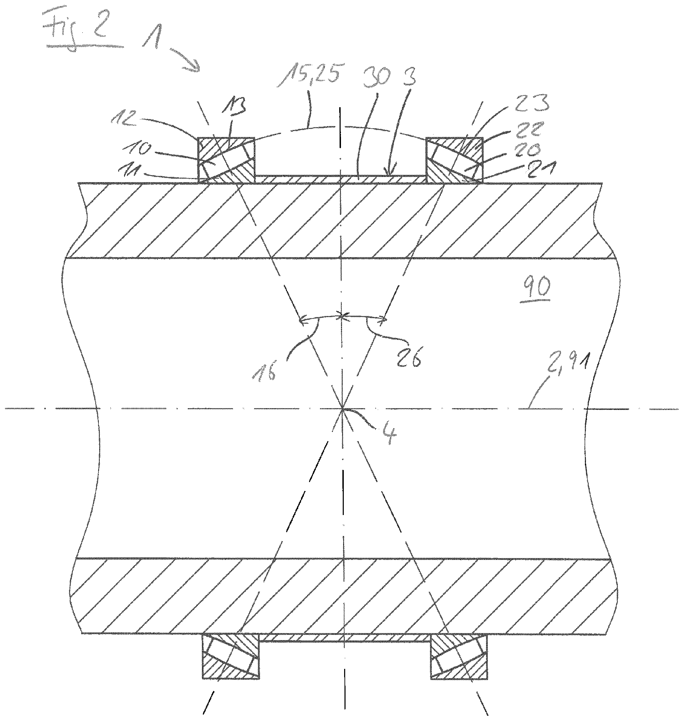

In Figur 2 ist ein zweites Ausführungsbeispiel eines erfindungsgemäßen Wälzlagers 1 dargestellt. Das Wälzlager 1 gleicht dabei in weiten Teilen demjenigen aus Figur 1, weshalb auf die diesbezüglichen Ausführungen verwiesen und im Folgenden nur auf die Unterschiede eingegangen wird.

In dem Ausführungsbeispiel gemäß Figur 2 ist das Distanzelement 3 deutlich länger als in Figur 1, wodurch sich größere Druckwinkel 16, 26 von betragsmäßig jeweils 25° ergeben, sodass das Verhältnis der Aufnahmefähigkeit von Radial- und Axialbelastungen in Richtung von Axialbelastungen verschiebt. Um die Aufnahmefähigkeit der Rollenreihen 10, 20 insgesamt zu erhöhen, weisen die Rollen der Rollenreihen 10, 20 weiterhin eine gegenüber dem Ausführungsbeispiel aus Figur 1 größere Länge auf. Der Radius 15, 25 für die Lauffläche 13, 23 an den Außenringen 12, 22 ist dabei größer als bei dem Ausführungsbeispiel gemäß Figur 1.

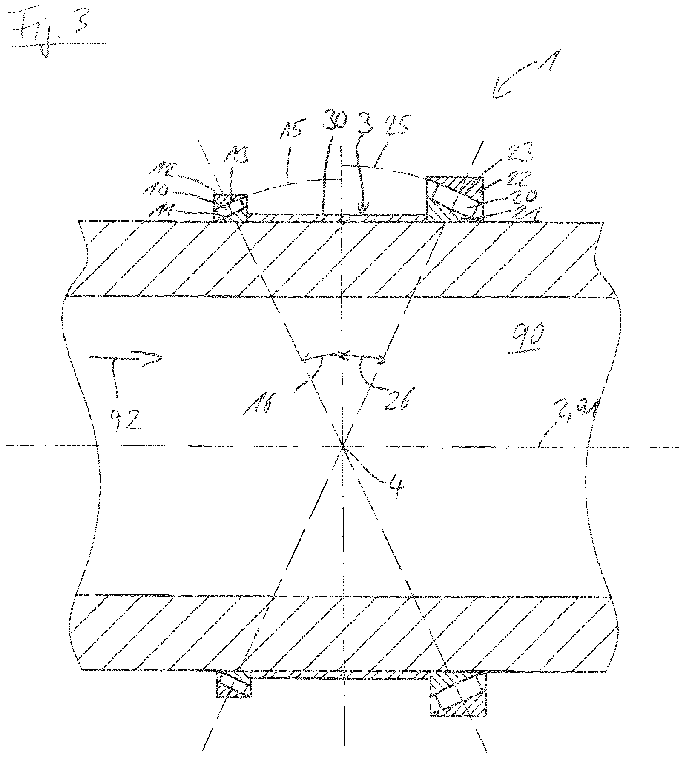

Bei den Ausführungsbeispielen gemäß Figuren 1 und 2 ist das Wälzlager 1 jeweils symmetrisch aufgebaut, sodass die Aufnahmefähigkeit insbesondere für Axialbelastungen unabhängig von der Richtung der Belastung identisch ist. Der Triebstrang einer Windenergieanlage und damit auch die Lagerung der Rotorwelle 90 wird aufgrund der einwirkenden Windlasten in einer axialen Richtung von dem Rotor hin zum Getriebe aber grundsätzlich deutlich höher belastet als in der Gegenrichtung. Diesen unterschiedlichen Anforderungen an die Aufnahmefähigkeit von Axialbelastungen wird das Wälzlager 1 gemäß Figur 3 gerecht, welches auf den Wälzlagern 1 gemäß Figuren 1 und 2 aufbaut, sodass auf die diesbezüglichen Ausführungen verwiesen wird.

Für Figur 3 ist anzunehmen, dass der Rotor der Windenergieanlage links von dem dargestellten Ausschnitt der Rotorwelle 90 angeordnet ist, womit sich der Generator rechts davon befindet. Die Hauptrichtung der axialen Belastungen ist durch den Pfeil 92 angedeutet.

Die beiden Rollenreihen 10, 20 weisen weiterhin einen betragsmäßig identischen Druckwinkel 16, 26 von 25° auf, wobei auch die hohlkugelförmigen Laufflächen 13, 23 der beiden Außenringe 12, 22 einen gemeinsamen Mittelpunkt 4 aufweisen, sodass weiterhin eine gewisse Winkelbeweglichkeit des Lagers gegeben ist. Um die Aufnahmefähigkeit für Axialbelastung in Richtung 92 zu erhöhen, die die Längen der Rollen der einen Rollenreihe 20, die weiter vom Rotor entfernt liegt, größer sind als die Längen der Rollen in der Rollenreihe 10, die dem Rotor näher liegt. Darüber hinaus ist der der Radius der hohlkugelförmigen Laufbahn 23 des Außenrings 22, der weiter entfernt von dem Rotor liegt, größer ist als der Radius der hohlkugelförmigen Laufbahn 13 des dem Rotor näherliegenden Außenrings 12. In der Folge ist die Aufnahmefähigkeit für axiale Belastungen in Richtung des Pfeils 92 höher als in die entgegengesetzte Richtung.

## Patentansprüche

1. Wälzlager (1) für die Triebstranglagerung von Windenergieanlagen, mit zwei Rollenreihen (10, 20), die jeweils zwischen einem Innenring (11, 21) und einem Außenring (12, 22) umlaufen, wobei die Außenringe (12, 22) konzentrisch um eine gemeinsame Lagerachse (2) angeordnet sind,
und die beiden Innenringe (11, 21) getrennt voneinander ausgeführt und durch ein Distanzelement (3) in axialer Richtung voneinander beabstandet sind, **dadurch gekennzeichnet, dass** die Laufbahnen (13, 23) der Außenringe (12, 22) jeweils hohlkugelförmig ausgestaltet sind, wobei die Mittelpunkte (4) der beiden hohlkugelförmigen Laufbahnen (13, 23) kongruent und auf der Lagerachse (2) liegend sind.

2. Wälzlager nach Anspruch 1,
**dadurch gekennzeichnet, dass**
der Druckwinkel (16, 26) der beiden Rollenreihen (10, 20) betragsmäßig identisch ist.

3. Wälzlager nach Anspruch 1 oder 2,
**dadurch gekennzeichnet, dass**
der Radius (25) der einen hohlkugelförmigen Laufbahn (23) größer ist als der Radius (15) der anderen hohlkugelförmigen Laufbahn (13).

4. Wälzlager nach einem der vorhergehenden Ansprüche,
**dadurch gekennzeichnet, dass**
die Längen und/oder der Durchmesser der Rollen der einen Rollenreihe (20) größer sind als die Längen und/oder der Durchmesser der Rollen in der anderen Rollenreihe (20).

5. Wälzlager nach einem der vorhergehenden Ansprüche,
**dadurch gekennzeichnet, dass**
der Innendurchmesser der beiden Innenringe (11, 21) identisch ist, wobei der Innendurchmesser des Distanzelementes (3) vorzugsweise um ein, wenigstens eine Spielpassung sicherstellendes Maß größer ist als der Innendurchmesser der beiden Innenringe (11, 21).

6. Wälzlager nach einem der vorhergehenden Ansprüche,
**dadurch gekennzeichnet, dass**
die Lage des Distanzelementes (3) zu wenigstens einem Innenring (11, 21) allein durch eine durch die Innenringe (11, 21) und das Distanzelement (3) eingeschobene, zu lagernde Welle (90) festgelegt ist, wobei das Distanzelement (3) auf Stoß mit dem wenigstens einen Innenring (11, 21) liegt.

7. Wälzlager nach einem der vorhergehenden Ansprüche,
**dadurch gekennzeichnet, dass**
das Distanzelement (3) mit einem oder beiden Innenringen (11, 21) einstückig ausgeführt ist.

8. Wälzlager nach einem der vorhergehenden Ansprüche,
**dadurch gekennzeichnet, dass**
das Distanzelement (3) eine Distanzhülse (30) ist.

9. Windenergieanlage mit einem um eine im Wesentlichen horizontale Achse drehbaren Rotor,
**dadurch gekennzeichnet, dass**
die Rotorwelle (90) mit einem Wälzlager (1) gemäß einem der vorhergehenden Ansprüche gelagert ist.

10. Windenergieanlage nach Anspruch 9,
**dadurch gekennzeichnet, dass**
der Radius (25) der vom Rotor weiter entfernten hohlkugelförmigen Laufbahn (23) größer ist als der Radius (15) der dem Rotor näherliegenden anderen hohlkugelförmigen Laufbahn (13).

11. Windenergieanlage nach Anspruch 9 oder 10,
**dadurch gekennzeichnet, dass**
die Länge und/oder der Durchmesser der Rollen der vom Rotor weiter entfernten Rollenreihe (20) größer ist als die Länge und/oder der Durchmesser der Rollen der dem Rotor näherliegenden Rollenreihe (10).

## Claims

1. Rolling bearing (1) for the drivetrain mounting of wind turbines, having two roller rows (10, 20) which each run around between an inner ring (11, 21) and an outer ring (12, 22), wherein the outer rings (12, 22) are arranged concentrically around a common bearing axis (2), and the two inner rings (11, 21) are configured to be separate from one another and are spaced apart from one another in the axial direction by a spacer element (3), **characterized in that** the raceways (13, 23) of the outer rings (12, 22) are each hollow-spherical in design, wherein he centre points (4) of the two hollow-spherical raceways (13, 23) are congruent and lie on the bearing axis (2).

2. Rolling bearing according to Claim 1,
**characterized in that**
the pressure angle (16, 26) of the two roller rows (10, 20) is identical in terms of size.

3. Rolling bearing according to Claim 1 or 2,
**characterized in that**
the radius (25) of the one hollow-spherical raceway (23) is larger than the radius (15) of the other hollow-spherical raceway (13).

4. Rolling bearing according to one of the preceding claims,
**characterized in that**
the lengths and/or the diameter of the rollers of the one roller row (20) are/is larger than the lengths and/or the diameter of the rollers in the other roller row (20).

5. Rolling bearing according to one of the preceding claims,
**characterized in that**
the inside diameter of the two inner rings (11, 21) is identical, wherein the inside diameter of the spacer element (3) is preferably larger, by a dimension ensuring at least one clearance fit, than the inside diameter of the two inner rings (11, 21).

6. Rolling bearing according to one of the preceding claims,
**characterized in that**
the position of the spacer element (3) with respect to at least one inner ring (11, 21) is determined solely by a shaft (90) to be mounted that is inserted through the inner rings (11, 21) and through the spacer element (3), wherein the spacer element (3) abuts the at least one inner ring (11, 21).

7. Rolling bearing according to one of the preceding claims,
**characterized in that**
the spacer element (3) is configured in one piece with one or both inner rings (11, 21).

8. Rolling bearing according to one of the preceding claims,
**characterized in that**
the spacer element (3) is a spacer sleeve (30).

9. Wind turbine having a rotor which is rotatable about a substantially horizontal axis,
**characterized in that**
the rotor shaft (90) is mounted with a rolling bearing (1) according to one of the preceding claims.

10. Wind turbine according to Claim 9,
**characterized in that**
the radius (25) of the hollow-spherical raceway (23) further away from the rotor is larger than the radius (15) of the other hollow-spherical raceway (13) nearer the rotor.

11. Wind turbine according to Claim 9 or 10,
**characterized in that**
the length and/or the diameter of the rollers of the roller row (20) further away from the rotor are/is larger than the length and/or the diameter of the rollers of the roller row (10) nearer the rotor.

## Revendications

1. Palier à roulement (1) pour le logement des paliers d'entraînement d'éoliennes, comprenant deux rangées de roulements (10, 20) qui tournent respectivement entre une bague intérieure (11, 21) et une bague extérieure (12, 22), les bagues extérieures (12, 22) étant disposées de manière concentrique autour d'un axe de palier (2) commun, et les deux bagues intérieures (11, 21) étant réalisées séparément l'une de l'autre et espacées l'une de l'autre dans la direction axiale par un élément d'écartement (3), **caractérisé en ce que** les chemins de roulement (13, 23) des bagues extérieures (12, 22) sont respectivement configurés sous forme de sphère creuse, les centres (4) des deux chemins de roulement (13, 23) sous forme de sphère creuse étant congruents et situés sur l'axe de palier (2).

2. Palier à roulement selon la revendication 1, **caractérisé en ce que** l'angle de contact (16, 26) des deux rangées de roulements (10, 20) est de valeur identique.

3. Palier à roulement selon la revendication 1 ou 2, **caractérisé en ce que** le rayon (25) dudit un chemin de roulement en forme de sphère creuse (23) est supérieur au rayon (15) de l'autre chemin de roulement en forme de sphère creuse (13) .

4. Palier à roulement selon l'une quelconque des revendications précédentes, **caractérisé en ce que** les longueurs et/ou le diamètre des roulements de ladite une rangée de roulements (20) sont supérieurs aux longueurs et/ou au diamètre des roulements dans l'autre rangée de roulements (20) .

5. Palier à roulement selon l'une quelconque des revendications précédentes, **caractérisé en ce que** le diamètre intérieur des deux bagues intérieures (11, 21) est identique, le diamètre intérieur de l'élément d'écartement (3) étant de préférence supérieur au diamètre intérieur des deux bagues intérieures (11, 21) d'une dimension assurant un ajustement avec jeu.

6. Palier à roulement selon l'une quelconque des revendications précédentes, **caractérisé en ce que** la position de l'élément d'écartement (3) par rapport à au moins une bague intérieure (11, 21) est définie uniquement par un arbre (90) à monter, inséré à travers les bagues intérieures (11, 21) et l'élément d'écartement (3), l'élément d'écartement (3) étant situé bout à bout avec ladite au moins une bague intérieure (11, 21).

7. Palier à roulement selon l'une quelconque des revendications précédentes, **caractérisé en ce que** l'élément d'écartement (3) est réalisé d'un seul tenant avec une ou avec les deux bagues intérieures (11, 21).

8. Palier à roulement selon l'une quelconque des revendications précédentes, **caractérisé en ce que** l'élément d'écartement (3) est une douille d'écartement (30).

9. Eolienne, comprenant un rotor tournant autour d'un axe substantiellement horizontal, **caractérisée en ce que** l'arbre de rotor (90) est monté sur un palier à roulement (1) selon l'une quelconque des revendications précédentes.

10. Eolienne selon la revendication 9, **caractérisée en ce que** le rayon (25) du chemin de roulement (23) en forme de sphère creuse plus éloigné du rotor est supérieur au rayon (15) de l'autre chemin de roulement (13) en forme de sphère creuse plus proche du rotor.

11. Eolienne selon la revendication 9 ou 10, **caractérisée en ce que** la longueur et/ou le diamètre des roulements de la rangée de roulements (20) plus éloignée du rotor sont supérieurs à la longueur et/ou au diamètre des roulements de la rangée de roulements (10) plus proche du rotor.
